(19) **Europäisches Patentamt / European Patent Office / Office européen des brevets**

(11) **EP 4 556 891 B1**

(12) # EUROPEAN PATENT SPECIFICATION

(45) Date of publication and mention
of the grant of the patent:
**03.06.2026 Bulletin 2026/23**

(21) Application number: **23306983.0**

(22) Date of filing: **16.11.2023**

(51) International Patent Classification (IPC):
*G01N 21/64* (2006.01)

(52) Cooperative Patent Classification (CPC):
**G01N 21/6489; G01N 21/6408**

(54) **METHOD AND DEVICE FOR SIMPLIFIED DETERMINATION OF EFFECTIVE ELECTRON LIFETIME**

VERFAHREN UND VORRICHTUNG ZUR VEREINFACHTEN BESTIMMUNG DER EFFEKTIVEN ELEKTRONENLEBENSDAUER

PROCÉDÉ ET DISPOSITIF POUR LA DÉTERMINATION SIMPLIFIÉE DE LA DURÉE DE VIE EFFICACE D'ÉLECTRONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**21.05.2025 Bulletin 2025/21**

(73) Proprietors:
- **Centre National de la Recherche Scientifique**
  **75016 Paris (FR)**
- **Institut Photovoltaique d'Ile de France**
  **91120 Palaiseau (FR)**
- **Electricité de France**
  **75008 Paris (FR)**
- **TotalEnergies OneTech**
  **92400 Courbevoie (FR)**
- **Ecole Polytechnique**
  **91120 Palaiseau (FR)**

(72) Inventor: **POPLAWSKI, Mateusz**
**MELBOURNE, 3011 (AU)**

(74) Representative: **IPAZ**
**Parc Les Algorithmes**
**Bâtiment Platon**
**91190 Saint Aubin (FR)**

(56) References cited:
**US-A1- 2004 266 086    US-A1- 2011 234 790**

- **MATEUSZ POPLAWSKI: "In situ minority carrier lifetime via fast modulated photoluminescence", vol. 14, 1 January 2023 (2023-01-01), Les Ulis, pages 19, XP093154655, ISSN: 2105-0716, Retrieved from the Internet <URL:https://www.epj-pv.org/articles/epjpv/pdf/2023/01/pv220069.pdf> DOI: 10.1051/epjpv/2023010**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention relates to techniques for determining effective electron lifetime, or effective carrier lifetime, in components.

The invention is of particular, non-limiting interest in the photovoltaic industry.

### Background

Effective electron lifetime measurement techniques are commonly used to control the quality of photovoltaic components during the manufacturing process.

Contactless methods and specifically modulated photoluminescence (MPL) techniques have been developed for carrying out such measurements, as described for example in the documents EP4257958A1 and EP3767282A1. Generally, MPL techniques involve measuring phase shifts between an excitation frequency-modulated signal and a corresponding emitted photoluminescence signal.

Known MPL techniques are powerful but involve complex calculations to determine effective electron lifetime.

### Description of the invention

The invention is generally aimed at simplifying the known techniques for determining effective electron lifetime.

According to an aspect of the invention, it is provided a method for determining effective electron lifetime in a component to be analysed.

The method of the invention comprises the following steps:

- emitting an excitation light beam comprising one or several pulses,
- detecting a photoluminescence light emitted by the component in response to the excitation light beam,
- for each or at least one of said pulses of the excitation light beam, calculating an effective electron lifetime value based on a temporal shift between this pulse and a corresponding pulse of the photoluminescence light.

In an embodiment, said excitation light beam comprises several pulses that are temporally spaced from one another and that have respective absolute maximum amplitudes different from one another.

In other words, each or at least one of said pulses may have a respective absolute maximum amplitude that is different from the absolute maximum amplitude of the other pulses.

In an embodiment, each or at least one of said pulses of the excitation light beam is a Gaussian pulse.

In an embodiment, the step for calculating said effective electron lifetime value comprises, for each or at least one of said pulses of the excitation light beam, determining a plurality of mean amplitude difference values between the excitation light beam pulse and the corresponding photoluminescence light pulse.

Each or at least one of said mean amplitude difference values can be related to a respective temporal shift of these pulses one with respect to the other.

In an embodiment, the step for calculating said effective electron lifetime value comprises, for each or at least one of said pulses of the excitation light beam, determining said effective electron lifetime value based on the minimum of said mean amplitude difference values.

In an embodiment, each or at least one of said mean amplitude difference values is calculated using the following formula: $A_i = \sum_{j=1}^{n}\left(P1_i - P2_{i,j}\right)^2$, where $A_i$ is the mean amplitude difference value for a temporal shift $i$, $P1$ is the excitation light beam pulse amplitude, $P2$ is the corresponding photoluminescence light pulse amplitude, and n is a number of points defining the latter pulse.

In an embodiment, for each or at least one of said pulses of the excitation light beam, the effective electron lifetime value corresponds to the temporal shift associated with the minimum of said mean amplitude difference values.

In an embodiment, said excitation light beam comprises several plateaux, each or at least one of said pulses of the excitation light beam being generated from one respective of these plateaux.

In other words, each pulse can come out of a respective plateau preferably remaining within a quasi-steady-state regime.

In other words, a pulse temporally succeeds a first plateau region and is followed by a second plateau region of some amplitude as the first plateau region.

In an embodiment, the amplitude of each or at least one of said pulses of the excitation light beam relative to its corresponding plateau is equal to a predetermined value.

In an embodiment, said predetermined value is equal from one of said pulses to the other.

In an embodiment, said component to be analysed forms, or is intended to form, a photovoltaic cell element.

According to another aspect, the invention provides a device for determining effective electron lifetime in a component to be analysed.

The device of the invention can be specifically configured for carrying out a method as defined above.

The device of the invention comprises:

- a light source configured to emit an excitation light beam comprising one or several pulses,
- a detector configured to detect a photoluminescence light emitted by the component in response to the excitation light beam,
- a processing unit configured to calculate, for each or at least one of said pulses of the excitation light beam, an effective electron lifetime value based on a temporal shift between this pulse and a corresponding pulse of the photoluminescence light.

According to another aspect, the invention provides a computer program comprising instructions to cause a device as defined above to execute the steps of a method as defined above.

According to a further aspect, the invention provides a computer-readable medium having stored thereon a computer program as defined above.

The present invention simplifies the determination of effective electron lifetime, allows fast measurements and lowers the hardware requirements for processing the data.

The present invention, and all its aspects, embodiments and advantages associated therewith will become more readily apparent in view of the detailed description of particular embodiments provided below, including the accompanying drawings.

**Brief description of the drawings**

The following, non-limiting, embodiments of the invention are described with reference to the accompanying drawings in which:

- Figure 1 is a schematic representation of a device according to the invention, for determining effective electron lifetime in a component to be analysed;
- Figure 2 is a signal forming an excitation light beam that can be generated according to the invention;
- Figure 3 shows a portion of the signal of figure 2 and a corresponding portion of a response photoluminescence light that is collected according to the invention;
- Figure 4 is a schematic representation of a PECVD reactor for determining effective electron lifetime in a component according to the invention;
- Figure 5 is a flowchart showing steps of a method according to the invention.

**Detailed description of embodiments**

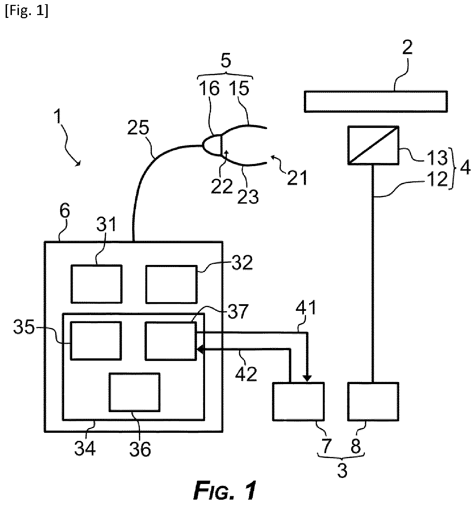

Figure 1 shows schematically a device 1 in accordance with the invention, for determining effective electron lifetime in a component 2 to be analysed.

The device 1 of figure 1 is adapted to operate in situ.

The component 2, also called "sample", generally forms an area of interest, for example of a circuitry, such as a semiconductor area.

In this non limitative example, the component 2 is a part of an assembly of layers forming a photovoltaic cell.

As known per se, the effective electron lifetime is the amount of time an electron remains within the conduction band between photon absorption - in particular photon with higher energy than band gap - and photon emission at the bandgap energy.

In this embodiment, the device 1 comprises a light generator 3, an optical system 4, a detector 5, and a processing unit 6.

The light generator 3 comprises a command unit 7 and a light source 8.

In this example, the light source 8 is a laser source, comprising for example a laser diode.

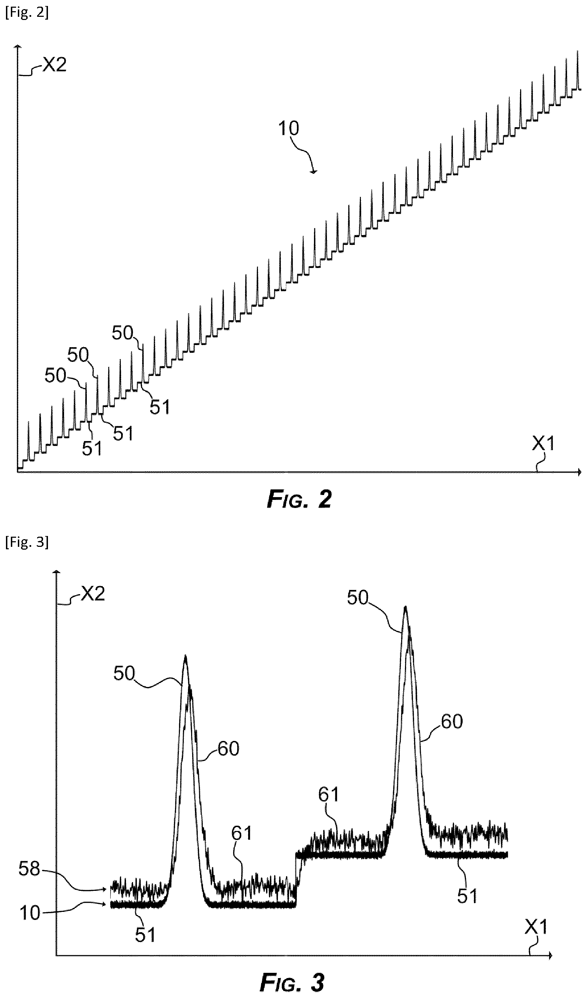

The light source 8 is configured to generate an excitation light beam, and more particularly an excitation light beam signal 10 as illustrated in figure 2 (see further below).

The command unit 7 is configured to command the light source 8 by sending command signals to the light source 8.

The optical system 4 is configured to transport said excitation light beam emitted by the light source 8 towards the component 2.

In this specific embodiment, the optical system 4 comprises a fibre 12 and a separator 13.

The fibre 12 is configured to convey the excitation light beam from an output of the light source to the separator 13.

In this example, the separator 13 is a shortpass Dichroic filter with a cute-off wavelength.

The separator 13 of figure 1 defines a transmitting light path and a reflecting light path according to the wavelength. The transmitting path is for light below cut-of wavelength. The reflecting path is for light with a higher wavelength than the cut-off wavelength.

In this example, the cut-off wavelength is equal to 950 nm.

In the embodiment of figure 1, the separator 13 is configured so that the transmitting path corresponds to a light outputted from the fibre 12 and sent towards the component 2, while the reflecting path corresponds to a light coming from the component 2 and sent to the detector 5.

The detector 5 is configured to detect the photoluminescence light emitted by the component 2 in response to the excitation light beam.

In this embodiment, the detector 5 comprises a compound parabolic concentrator 15 and a photodetector 16.

As known per se, a compound parabolic concentrator is a reflective, non-imaging optical device, which employs specifically configured parabolic properties to take advantage of the maximum concentration of light energy.

Referring to figure 1, the compound parabolic concentrator 15 defines an input end 21, an output end 22, and a wall 23 having a parabolic shape and connecting the ends 21 and 22 to each other. The input end 21 is larger than the output end 22 to collect efficiently divergent light, which is then reflected and concentrated by the wall 23. Such a concentrator 15 enables to collect at the output end 22 a relatively large part of the photoluminescence light emitted by the component 2.

Advantageously, the concentrator 15 may have an optical filter (not shown), for example a 785 nm laser line filter, at the input end 21.

The photodetector 16 of the detector 5 of figure 1 is positioned at the output end 22 of the compound parabolic concentrator 15.

In this example, the photodetector 16 comprises an InGaAs photodiode.

Referring now to the processing unit 6 of figure 1, this unit 6 is connected to the photodetector 16 with a coaxial cable 25.

In this example, the processing unit 6 comprises a calculator 31 and data storage components 32.

As non-limiting examples, the calculator 31 may comprise a monocore or multicore processor - such as a CPU, a GPU, a microcontroller, and/or a DSP -, a programmable logic circuitry - such as an ASIC, a FPGA, a PLD, and/or a PLA -, a state machine, gated logic and/or discrete hardware components.

In this particular embodiment, the processing unit 6 comprises an electronic processing subunit 34 comprising an amplifier 35, a low-pass filter 36 and a voltage data logger 37 having the role of a function generator.

In the present example, the voltage data logger 37 is configured to send data to the command unit 7, via a coaxial cable 41, to modify parameters of the excitation light beam signal generated by the generator 3, and to record the signal of the light source 8 via another coaxial cable 42.

Referring now to figure 2, a signal 10 is depicted on a graph where the abscissa X1 corresponds to time and the ordinate X2 corresponds to amplitude, or intensity.

The signal 10 of figure 2 comprises several pulses 50 and several plateaux 51.

The plateaux 51 are temporally spaced from one another and each of them has a respective absolute amplitude.

In this non-limiting example, the absolute amplitude of the plateaux 51 increases from one plateau to the next, according to a linear function.

In this example, the pulses 50 are respectively associated with these plateaux 51. More specifically, each of said pulses 50 is generated from a respective plateau 51, so that the absolute amplitude at which the pulses 50 are generated also increases from one pulse to the next according to X1.

In the example of figure 2, each of said pulses 50 is a Gaussian pulse.

Each pulse 50 can thus be in accordance with the following formula: $PA(T) = C * e^{-T^2/2D^2}$ ,

where *PA* is the amplitude of the pulse over time *T, C* is a predetermined amplitude and D is a predetermined standard deviation representative of a width of the pulse.

As a non-limiting example, the ratio of the amplitude *C* to the width of each pulse 50 can be about eight to one.

In the described method, the width of the pulse 50 is selected to be greater than the effective electron lifetime values to be determined, for example up to twenty times greater.

Accordingly, maximum measurement speed can be determined based on the expected effective electron lifetime values.

In the signal 10 of figure 2, the values *C* and *D* are common to all the pulses 50.

In other words, the relative amplitude of each of said pulses 50 of the signal 10, i.e., its maximum amplitude relative to its corresponding plateau 51, remains identical from one pulse to the other, and each of said pulses 50 has a respective absolute maximum amplitude that is different from the absolute maximum amplitude of the other pulses 50.

Also, in this non-limiting example, the absolute maximum amplitude of the pulses 50 of the signal 10 increases over time, i.e., from one pulse to the next, according to a linear function.

As a simple quantitative example, the signal 10 can have a number of pulses 50 per second in the range from 1 to 10, and their width can be comprised between 0.005 s and 0.02 s.

The signal 10 of figure 2 here constitutes an excitation light beam that can be used in methods and devices according to the invention.

In this non-limiting example, the device 1 of figure 1 is used so that the light source 8 emits an excitation light beam that corresponds to the signal 10 of figure 2, and the detector 5 detects a corresponding photoluminescence light.

Figure 3 shows a temporal portion of these excitation light beam 10 and corresponding normalized photoluminescence light signal 58.

The photoluminescence light signal 58 being emitted in response to the excitation light beam 10, its shape is generally similar to that of the excitation light beam 10.

The photoluminescence light signal 58 is thus provided with pulses 60 and plateaux 61 similar to that of the excitation light beam 10. The above description of figure 2 applies mutatis mutandis.

Figure 3 shows more specifically two pulses 50 and two respective plateaux 51 of the excitation light beam 10, as well as two corresponding pulses 60 and two respective plateaux 61 of the photoluminescence light signal 58.

According to the invention, a step for calculating an effective electron lifetime value is performed for each of the pulses 50 of the excitation light beam 10, using in this example the processing unit 6.

Basically, effective electron lifetime values are based on a temporal shift between two corresponding pulses 50 and 60.

In this example, the calculation step comprises an iteration of the following steps for each couple of pulses 50 and 60.

In a first iteration, a first effective electron lifetime value is calculated based on a temporal shift between the pulses 50 and 60 at the left of figure 3, called first pulses 50 and 60.

A plurality of mean amplitude difference values between these first pulses 50 and 60 is determined.

Each of said mean amplitude difference values is related to a respective temporal shift of these first pulses 50 and 60, one with respect to the other.

For example, each of said mean amplitude difference values can be calculated using the following formula: $A_i = \sum_{j=1}^{n} \left( P1_j - P2_{j,i} \right)^2$, where $A_i$ is the mean amplitude difference value for a temporal shift $i$, $P1$ is the amplitude of the excitation light beam pulse 50, $P2$ is the amplitude of the corresponding photoluminescence light pulse 60, and $n$ is a number of points defining the pulse 60, the time between these points being related to the acquisition rate.

An effective electron lifetime value is then determined based on the minimum of said mean amplitude difference values.

The effective electron lifetime value here corresponds to the temporal shift associated with the minimum of said mean amplitude difference values.

Other iterations of these steps are performed to calculate effective electron lifetime values associated with the other pair of pulses 50 and 60, e.g., a second iteration for the pulses 50 and 60 at the right of figure 3, called second pulses 50 and 60, and so on for the other pulses not shown in figure 3.

Of course, the above-described emitting and/or detecting and/or calculating steps can be carried out with a device having other features than the specific embodiment of figure 1.

In addition, the principle of the invention as defined in the claims, and more specifically the calculation of any effective electron lifetime value, can be carried out using an excitation light beam having other parameters than the signal of figure 2. For example, the excitation light beam can comprise one or more asymmetric pulses and/or that are respectively generated at varying maximum absolute and/or relative amplitudes according to any function or randomly.

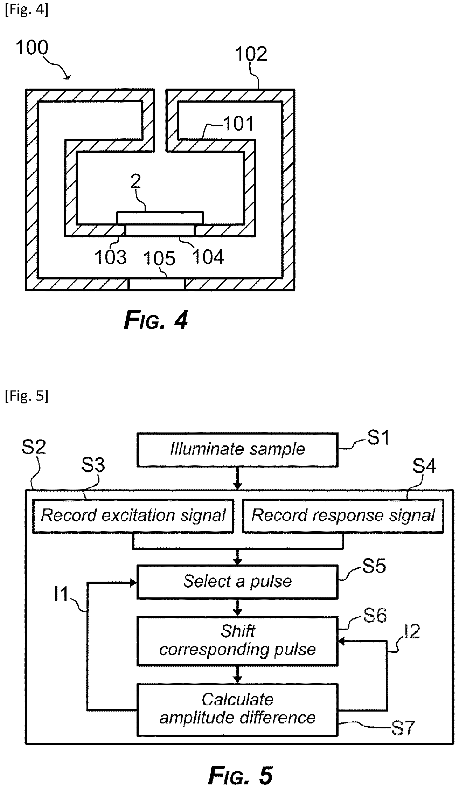

Figure 4 illustrates a specific use of a device according to the invention, in this example of the device 1 of figure 1, for measuring effective electron lifetime in the component 2 within a reactor 100.

In this embodiment, the reactor 100 is an apparatus in which circuitry is built, for example a "PECVD" (for plasma-enhanced chemical vapor deposition) reactor as known per se in the art.

The reactor 100 comprises an inner chamber 101 and an external chamber 102 into which the inner chamber 101 is located.

In this example, the component 2 to be analysed is received in the inner chamber 101 and the reactor 100 is adapted for interacting with the device 1 of the invention as described below.

The inner chamber 101 comprises a sample holder 103 and an observation aperture 104 upon which the component 2 is placed. A window 105 of the external chamber 102 defines an access to the observation aperture 104.

In this example, the window 105 is configured to allow illuminating the component 2 with an excitation light beam and collecting a photoluminescence light emitted by the component 2 in response to the excitation light beam, according to the above-described method and using the device 1 of figure 1.

Referring to figure 5, the invention generally relates to a method comprising a step S1 where a sample as the above-described component 2 is illuminated, and a step S2 where one or more effective electron lifetime values are calculated.

Step S1 can be carried out using the light generator 3 of the device 1 of figure 2, to emit for example an excitation light beam as illustrated in figure 2.

Step S2 generally comprises steps S3 and S4 for recording the excitation light beam signal and a response signal, the latter corresponding in this case to the above-described photoluminescence light emitted by the sample in response to the excitation light beam.

Step S2 also comprises one or more iterations I1 of steps S5, S6 and S7. In step S5, a pulse of the excitation signal is selected. In step S6, two corresponding pulses of the excitation signal and the response signal, respectively, are shifted and an amplitude difference between these pulses is calculated in step S7. Iterations I2 of steps S6 and S7 are performed to find the optimum overlap of corresponding pulses. Step S2 can be carried out according to the above-described technique.

## Claims

1. Method for determining effective electron lifetime in a component (2) to be analysed, comprising the following steps:

    - emitting an excitation light beam (10) comprising one or several pulses (50),
    - detecting a photoluminescence light (58) emitted by the component (2) in response to the excitation light beam (10),
    - for each or at least one of said pulses (50) of the excitation light beam (10), calculating an effective electron lifetime value based on a temporal shift between this pulse (50) and a corresponding pulse (60) of the photoluminescence light (58).

2. Method according to claim 1, wherein said excitation light beam (10) comprises several pulses (50) that are temporally spaced from one another and that have respective absolute maximum amplitudes different from one another.

3. Method according to claim 1 or 2, wherein each or at least one of said pulses (50) of the excitation light beam (10) is a Gaussian pulse.

4. Method according to anyone of claims 1 to 3, wherein the step for calculating said effective electron lifetime value comprises, for each or at least one of said pulses (50) of the excitation light beam (10):

    - determining a plurality of mean amplitude difference values between the excitation light beam pulse (50) and the corresponding photoluminescence light pulse (60), each or at least one of said mean amplitude difference values being related to a respective temporal shift of these pulses (50, 60) one with respect to the other,
    - determining said effective electron lifetime value based on the minimum of said mean amplitude difference values.

5. Method according to claim 4, wherein each or at least one of said mean amplitude difference values is calculated using the following formula:

$$A_i = \sum_{j=1}^{n}\left(P1_i - P2_{i,j}\right)^2,$$

where $A_i$ is the mean amplitude difference value for a temporal shift $i$, $P1$ is the excitation light beam pulse amplitude, $P2$ is the corresponding photoluminescence light pulse amplitude, and n is a number of points defining the latter pulse.

6. Method according to claim 4 or 5, wherein, for each or at least one of said pulses (50) of the excitation light beam (10), the effective electron lifetime value corresponds to the temporal shift associated with the minimum of said mean amplitude difference values.

7. Method according to anyone of claims 1 to 6, wherein said excitation light beam (10) comprises several plateaux (51), each or at least one of said pulses (50) of the excitation light beam (10) being generated from one respective of these plateaux (51).

8. Method according to claim 7, wherein the amplitude of each or at least one of said pulses (50) of the excitation light beam (10) relative to its corresponding plateau (51) is equal to a predetermined value.

9. Method according to anyone of claims 1 to 8, wherein said component (2) to be analysed forms, or is intended to form, a photovoltaic cell element.

10. Device (1) for carrying out a method according to anyone of claims 1 to 9, for determining effective electron lifetime in a component (2) to be analysed, the device (1) comprising:

    - a light source (8) configured to emit an excitation light beam (10) comprising one or several pulses (50),
    - a detector (5) configured to detect a photoluminescence light (58) emitted by the component (2) in response to the excitation light beam (10),
    - a processing unit (6) configured to calculate, for each or at least one of said pulses (50) of the excitation light beam (10), an effective electron lifetime value based on a temporal shift between this pulse (50) and a corresponding pulse (60) of the photoluminescence light (58).

11. Computer program comprising instructions to cause a device (1) according to claim 10 to execute the steps of a method according to anyone of claims 1 to 9.

12. Computer-readable medium having stored thereon a computer program according to claim 11.

**Patentansprüche**

1. Verfahren zum Bestimmen der effektiven Elektronenlebensdauer in einer zu analysierenden Komponente (2), umfassend die folgenden Schritte:

    - Emittieren eines Anregungslichtstrahls (10), umfassend einen oder mehrere Pulse (50),
    - Erfassen eines Photolumineszenzlichts (58), das von der Komponente (2) als Reaktion auf den Anregungslichtstrahl (10) emittiert wird,
    - für jeden oder mindestens einen der Pulse (50) des anregenden Lichtstrahls (10), Berechnen eines effektiven Elektronenlebensdauerwerts basierend auf einer zeitlichen Verschiebung zwischen diesem Puls (50) und einem entsprechenden Puls (60) des Photolumineszenzlichts (58).

2. Verfahren nach Anspruch 1, wobei der Anregungslichtstrahl (10) mehrere Impulse (50) umfasst, die zeitlich voneinander beabstandet sind und die jeweils voneinander verschiedene absolute Maximalamplituden aufweisen.

3. Verfahren nach Anspruch 1 oder 2, wobei jeder oder mindestens einer der Pulse (50) des Anregungslichtstrahls (10) ein Gauß-Puls ist.

4. Verfahren nach einem der Ansprüche 1 bis 3, wobei der Schritt zum Berechnen des effektiven Elektronenlebensdauerwerts für jeden oder mindestens einen der Pulse (50) des Anregungslichtstrahls (10) Folgendes umfasst:

- Bestimmen einer Vielzahl von mittleren Amplitudendifferenzwerten zwischen dem Anregungslichtstrahlpuls (50) und dem entsprechenden Photolumineszenzlichtpuls (60), wobei jeder oder mindestens einer der mittleren Amplitudendifferenzwerte mit einer entsprechenden zeitlichen Verschiebung dieser Pulse (50, 60) zueinander in Beziehung steht,
- Bestimmen des effektiven Elektronenlebensdauerwerts basierend auf dem Minimum der mittleren Amplitudendifferenzwerte.

5. Verfahren nach Anspruch 4, wobei jeder oder mindestens einer der mittleren Amplitudendifferenzwerte unter Verwendung der folgenden Formel berechnet wird: $A_i = \sum_{j=1}^{n}\left(P1_i - P2_{i,j}\right)^2$ , wobei $A_i$ der mittlere Amplitudendifferenzwert für eine zeitliche Verschiebung $i$, $P1$ die Amplitude des Anregungslichtstrahls, $P2$ die Amplitude des entsprechenden Photolumineszenzlichtpulses und n die Anzahl der den letzteren definierenden Punkte ist.

6. Verfahren nach Anspruch 4 oder 5, wobei für jeden oder mindestens einen der Pulse (50) des Anregungslichtstrahls (10) der effektive Elektronenlebensdauerwert der zeitlichen Verschiebung entspricht, die mit dem Minimum der mittleren Amplitudendifferenzwerte verbunden ist.

7. Verfahren nach einem der Ansprüche 1 bis 6, wobei der Anregungslichtstrahl (10) mehrere Plateaus (51) umfasst, wobei jeder oder mindestens einer der Pulse (50) des Anregungslichtstrahls (10) von einem jeweiligen dieser Plateaus (51) erzeugt wird.

8. Verfahren nach Anspruch 7, wobei die Amplitude jedes oder mindestens eines der Pulse (50) des Anregungslichtstrahls (10) relativ zu seinem entsprechenden Plateau (51) gleich einem vorgegebenen Wert ist.

9. Verfahren nach einem der Ansprüche 1 bis 8, wobei die zu analysierende Komponente (2) ein Element einer Photovoltaikzelle bildet oder dazu bestimmt ist, ein solches zu bilden.

10. Vorrichtung (1) zum Durchführen eines Verfahrens nach einem der Ansprüche 1 bis 9, um die effektive Elektronenlebensdauer in einer zu analysierenden Komponente (2) zu bestimmen, die Vorrichtung (1) umfassend:

- eine Lichtquelle (8), die konfiguriert ist, um einen Anregungslichtstrahl (10) zu emittieren, der einen oder mehrere Pulse (50) umfasst,
- einen Detektor (5), der konfiguriert ist, um ein Photolumineszenzlicht (58) zu erfassen, das von der Komponente (2) als Reaktion auf den Anregungslichtstrahl (10) emittiert wird,
- eine Verarbeitungseinheit (6), die konfiguriert ist, um für jeden oder mindestens einen der Pulse (50) des Anregungslichtstrahls (10) einen effektiven Elektronenlebensdauerwert basierend auf einer zeitlichen Verschiebung zwischen diesem Puls (50) und einem entsprechenden Puls (60) des Photolumineszenzlichts (58) zu berechnen.

11. Computerprogramm, umfassend Anweisungen, um eine Vorrichtung (1) nach Anspruch 10 zu veranlassen, die Schritte eines Verfahrens nach einem der Ansprüche 1 bis 9 auszuführen.

12. Computerlesbares Medium mit einem darauf gespeicherten Computerprogramm nach Anspruch 11.

**Revendications**

1. Procédé permettant de déterminer la durée de vie effective des électrons dans un composant (2) à analyser, comprenant les étapes suivantes :

- émission d'un faisceau de lumière d'excitation (10) comprenant une ou plusieurs impulsions (50),
- détection d'une lumière de photoluminescence (58) émise par le composant (2) en réponse au faisceau de lumière d'excitation (10),
- pour chacune ou au moins l'une desdites impulsions (50) du faisceau de lumière d'excitation (10), calcul d'une valeur de durée de vie effective des électrons sur la base d'un décalage temporel entre ladite impulsion (50) et une impulsion correspondante (60) de la lumière de photoluminescence (58).

2. Procédé selon la revendication 1, dans lequel ledit faisceau de lumière d'excitation (10) comprend plusieurs impulsions (50) qui sont espacées temporellement les unes des autres et qui ont des amplitudes maximales absolues respectives différentes les unes des autres.

3. Procédé selon la revendication 1 ou 2, dans lequel chacune ou au moins l'une desdites impulsions (50) du faisceau de lumière d'excitation (10) est une impulsion gaussienne.

4. Procédé selon l'une quelconque des revendications 1 à 3, dans lequel l'étape de calcul de ladite valeur de durée de vie effective des électrons comprend, pour chacune ou au moins l'une desdites impulsions (50) du faisceau de lumière d'excitation (10) :

- la détermination d'une pluralité de valeurs de différence d'amplitude moyenne entre l'impulsion de faisceau de lumière d'excitation (50) et l'impulsion de lumière de photoluminescence correspondante (60), chacune ou au moins l'une desdites valeurs de différence d'amplitude moyenne étant liée à un décalage temporel respectif desdites impulsions (50, 60) les unes par rapport aux autres,
- la détermination de ladite valeur de durée de vie effective des électrons sur la base du minimum desdites valeurs de différence d'amplitude moyenne.

5. Procédé selon la revendication 4, dans lequel chacune ou au moins l'une desdites valeurs de différence d'amplitude moyenne est calculée à l'aide de la formule suivante :

$$A_i = \sum_{j=1}^{n} (P1_i - P2_{i,j})^2$$ , où $A_i$ représente la valeur de différence d'amplitude moyenne pour un décalage temporel $i$, $P1$ représente l'amplitude d'impulsion de faisceau de lumière d'excitation, $P2$ représente l'amplitude d'impulsion de lumière de photoluminescence correspondante, et n représente un nombre de points définissant cette dernière impulsion.

6. Procédé selon la revendication 4 ou 5, dans lequel, pour chacune ou au moins l'une desdites impulsions (50) du faisceau de lumière d'excitation (10), la valeur de durée de vie effective des électrons correspond au décalage temporel associé au minimum desdites valeurs de différence d'amplitude moyenne.

7. Procédé selon l'une quelconque des revendications 1 à 6, dans lequel ledit faisceau de lumière d'excitation (10) comprend plusieurs plateaux (51), chacune ou au moins l'une desdites impulsions (50) du faisceau de lumière d'excitation (10) étant générée à partir d'un plateau respectif parmi lesdits plateaux (51).

8. Procédé selon la revendication 7, dans lequel l'amplitude de chacune ou d'au moins l'une desdites impulsions (50) du faisceau de lumière d'excitation (10) par rapport à son plateau (51) correspondant est égale à une valeur prédéterminée.

9. Procédé selon l'une quelconque des revendications 1 à 8, dans lequel ledit composant (2) à analyser forme, ou est destiné à former, un élément formant cellule photovoltaïque.

10. Dispositif (1) permettant de mettre en œuvre un procédé selon l'une quelconque des revendications 1 à 9, pour la détermination de la durée de vie effective des électrons dans un composant (2) à analyser, le dispositif (1) comprenant :

- une source de lumière (8) configurée pour émettre un faisceau de lumière d'excitation (10) comprenant une ou plusieurs impulsions (50),
- un détecteur (5) configuré pour détecter une lumière de photoluminescence (58) émise par le composant (2) en réponse au faisceau de lumière d'excitation (10),
- une unité de traitement (6) configurée pour calculer, pour chacune ou au moins l'une desdites impulsions (50) du faisceau de lumière d'excitation (10), une valeur de durée de vie effective des électrons sur la base d'un décalage temporel entre ladite impulsion (50) et une impulsion correspondante (60) de la lumière de photoluminescence (58).

11. Programme informatique comprenant des instructions pour amener un dispositif (1) selon la revendication 10 à exécuter les étapes d'un procédé selon l'une quelconque des revendications 1 à 9.

12. Support lisible par ordinateur sur lequel est stocké un programme informatique selon la revendication 11.

[Fig. 1]

FIG. 1

[Fig. 2]

FIG. 2

[Fig. 3]

FIG. 3

[Fig. 4]

**FIG. 4**

[Fig. 5]

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4257958 A1

- EP 3767282 A1